# EUROPÄISCHE PATENTANMELDUNG

(11) **EP 2 840 038 A2**
(43) Veröffentlichungstag der Anmeldung: **25.02.2015**
(21) Anmeldenummer: 14191524.9
(22) Anmeldetag: 06.03.2008
(51) Int. Cl.: B65D 33/16, A22C 11/12

(54) **Verschlussklammer mit Rundboden**

(30) Priorität: 16.03.2007 DE 102007012776
(62) Teilanmeldung aus: 08004198.1
(71) Anmelder: Poly-clip System GmbH & Co. KG, 65795 Hattersheim (DE)
(72) Erfinder: Schleucher, Heiko, 63688 Gedern (DE); Hein, Klaus, 63688 Gedern (DE); Lapp, Gerhard, 65795 Hattersheim (DE)
(74) Vertreter: Eisenführ Speiser

(57) **Zusammenfassung**

Die Erfindung betrifft eine Verschlussklammer (10; 110) für sack- oder wurstförmige Produkte, deren Verpackungshüllenmaterial aus wenigstens einer Verpackungsfolie gebildet ist, wobei die Verschlussklammer (10; 110) einen Klammerboden (16; 116) und zwei sich an den Klammerboden (16; 116) in die gleiche Richtung anschließende und von dem Klammerboden (16; 116) voneinander weg divergierende gerade Klammerschenkel (12, 14; 112, 114) aufweist, deren Mittellängsachsen (ML) und die Mittellängsachse des Klammerbodens (16; 116) in einer gemeinsamen Ebene liegen. Weiterhin ist vorgesehen, dass der Klammerboden (16; 116) eine teilkreisbogenförmige Rundung aufweist und die Verschlussklammer einen Querschnitt in Form eines langgestreckten Ovals hat. Die Erfindung betrifft außerdem einen Klammerstrang aus Verschlussklammern sowie eine Matrize zum Verarbeiten von Verschlussklammern.

## Beschreibung

Die Erfindung betrifft eine Verschlussklammer für sack- oder wurstförmige Produkte gemäß dem Oberbegriff des Anspruchs 1, einen aus diesen Verschlussklammern gebildeten Klammerstrang gemäß dem Anspruch 12 sowie eine Matrize zur Verarbeitung der Verschlussklammern gemäß dem Anspruch 15.

Insbesondere betrifft die Erfindung eine Verschlussklammer für sack- oder wurstförmige Produkte, deren Verpackungshüllenmaterial aus wenigstens einer Verpackungsfolie gebildet ist, wobei die Verschlussklammer einen Klammerboden und zwei sich an den Klammerboden in die gleiche Richtung anschließende und von dem Klammerboden voneinander weg divergierende gerade Klammerschenkel aufweist, deren Mittellängsachsen und die Mittellängsachse des Klammerboden in einer gemeinsamen Ebene liegen. Weiterhin betrifft die Erfindung einen Klammerstrang aus diesen Verschlussklammern sowie eine Matrize zum Verarbeiten dieser Verschlussklammern.

Verschlussklammern bzw. Clips der genannten Art werden beispielsweise zum Schließen von Wurstverpackungen verwendet. Das Verschließen geschieht dabei mit Hilfe spezieller Maschinen, wie Clipmaschinen, welche entsprechenden Füllautomaten für das Zuführen und Abfüllen des zu verpackenden Produkts nachgeordnet sind. Zum Verschließen eines wurstförmigen Produktes wird ein zu einem Zopf geraffter Abschnitt des Verpackungshüllenmaterials in die Verschlussklammer eingeführt, die ihrerseits in einer der Form des Klammerbodens entsprechend geformten Matrize gehalten ist. Daraufhin werden die Schenkel der Klammer mit Hilfe eines gegen die Matrize bewegten Stempels um den Verpackungszopf herum verschlossen.

Aus dem deutschen Gebrauchsmuster 90 009 36 geht eine Verschlussklammer der eingangs genannten Art hervor, die einen Klammerboden und zwei sich an den Klammerboden in die gleiche Richtung anschließende und von dem Klammerboden voneinander wegdivergierende gerade Klammerschenkel aufweist, wobei die Mittellängsachsen der Klammerschenkel und die des Klammerbodens in einer gemeinsamen Ebene liegen. Der Klammerboden verläuft dabei gerade, sodass in der Draufsicht diese vorbekannte Verschlussklammer die Form des Buchstabens "U" mit vom Klammerboden aus auseinanderlaufenden Seitenschenkeln aufweist. Zwar sind bei dieser bekannten Verschlussklammer die Ecken, in denen der gerade Klammerboden in die geraden Klammerschenkel übergeht, abgerundet, jedoch besitzen diese Rundungen nur einen kleinen Rundungsradius. Hierdurch kann es beim Verschließen der Verschlussklammer in einer Clipmaschine mittels beispielsweise einer Matrize und einem Stempel an diesen Ecken zu einem Einknicken kommen, wodurch ein Riss innerhalb der Verschlussklammer entsteht. Dieser Riss schwächt die Verschlussklammer, sodass sie bei einer nur geringen weiteren Belastung bricht und damit ihre Verschlussfunktion verliert.

Es ist Aufgabe der vorliegenden Erfindung, eine Verschlussklammer der eingangs genannten Art bereitzustellen, bei der trotz einer hohen Schließkraft und einer damit einhergehenden starken Verformung der Klammer eine Rissbildung in der Klammer zuverlässig vermieden wird. Darüber hinaus ist es Aufgabe der Erfindung, einen Klammerstrang aus derartigen Verschlussklammern sowie eine Matrize zur Verarbeitung dieser Verschlussklammern bzw. dieses Klammerstrangs bereitzustellen.

Hinsichtlich der Verschlussklammer wird die vorstehende Aufgabe durch die Merkmale des Anspruchs 1 gelöst. In den sich daran anschließenden Ansprüchen 2 bis 11 finden sich vorteilhafte Ausgestaltungen hierzu.

Insbesondere wird eine Verschlussklammer für sack- oder wurstförmige Produkte, deren Verpackungshüllenmaterial aus wenigstens einer Verpackungsfolie bzw. einem Verpackungsvlies oder einem Verpackungsfasermaterial gebildet ist, vorgeschlagen, wobei die Verschlussklammer einen Klammerboden und zwei sich an den Klammerboden in die gleiche Richtung anschließende und von dem Klammerboden voneinander wegdivergierende gerade Klammerschenkel aufweist, deren Mittellängsachsen und die Mittellängsachse des Klammerbodens in einer gemeinsamen Ebene liegen, und wobei diese Verschlussklammer dahingehend ausgebildet ist, dass der Klammerboden eine teilkreisbogenförmige Rundung aufweist. Diese runde Form des Klammerbodens vermeidet Eckübergänge zwischen Klammerboden und Klammerschenkel, so dass beim Verschließen eine Rissbildung sicher vermieden wird. Darüber hinaus schont die erfindungsgemäße Verschlussklammer das Verpackungshüllenmaterial, da sich die Verschlussklammer optimal um den zu einem Zopf zusammengerafften Abschnitt des Verpackungshüllenmaterials formen kann. Hierdurch wird auch die Schließ- bzw. Zuhaltekraft deutlich erhöht. Darüber hinaus erleichtert die runde Form der Verschlussklammer die Anpassung der Klammergrößen an dünner werdende Verpackungshüllen.

Sind die Übergänge von dem Klammerboden zu den beiden Klammerschenkeln stetig bzw. gleichförmig ausgebildet, wird die Vermeidung eines Risses weiter unterstützt.

Das bereits vorstehend erwähnte schonende Umschließen des Verpackungshüllenmaterials im Bereich des hieraus gebildeten Zopfs wird weiterhin noch dadurch unterstützt, dass der Übergang von dem Klammerboden zu den beiden sich daran anschließenden Klammerschenkeln stetig bzw. gleichförmig erfolgt.

Grundsätzlich kann die erfindungsgemäße Verschlussklammer jeden gewünschten Querschnitt annehmen. Eine besonders vorteilhafte Ausgestaltung der Verschlussklammer ist gekennzeichnet durch einen Querschnitt, der im Wesentlichen die Form eines Ovals bzw. einer Ellipse besitzt. Dabei kann das Oval langgestreckt ausgestaltet sein, wobei vorzugsweise die Länge der Hauptachse des Ovals ein Vielfaches des Radius an den Scheitelpunkten der Ellipse beträgt.

Um eine Kodierung der Verschlussklammer durch Einprägen entsprechender Informationen auf der Klammer ermöglichen zu können, ist es weiterhin von Vorteil, dass das Oval gerade bzw. ebene Längsseiten aufweist, die zumindest annährend parallel zu der Hauptachse des Ovals verlaufen. Hierdurch kann die vorgenommene Prägung eine entsprechende Größe aufweisen, so dass sie mit dem menschlichen Auge erfasst werden kann. Zum Aufbringen der Prägung auf den teilkreisbogenförmigen Klammerboden kann ein entsprechend geformter Stempel vorgesehen werden.

Um eine gleichmäßige Verformung der Verschlussklammer in allen Bereichen erzielen zu können, ist es weiterhin vorteilhaft, wenn die Verschlussklammer eine im Wesentlichen über ihre gesamte Länge zumindest annähernd gleich bleibende Materialdicke besitzt.

Die erfindungsgemäße Verschlussklammer kann aus den unterschiedlichsten Materialien und den verschiedensten Halbzeugen hergestellt werden. Eine besonders einfache Herstellung lässt sich dadurch erzielen, dass die Verschlussklammer aus einem Draht, vorzugsweise aus Aluminium, gefertigt ist.

Um einen Klammerstrang aus aneinandergefügten Verschlussklammern bilden zu können, ist es weiterhin vorteilhaft, wenn an den freien Enden der Klammerschenkel von der Symmetrieachse der Klammer wegweisende Verbindungsfortsätze vorgesehen sind. Dabei ist es von Vorteil, wenn die Verbindungsfortsätze in einem Winkel von zumindest annähernd 90° vorzugsweise zu der Symmetrieachse der Verschlussklammer nach außen abgewinkelt sind. Des Weiteren können die vom Scheitelpunkt der teilkreisbogenförmigen Rundung des Klammerbodens wegweisenden Flächen der Verbindungsfortsätze zumindest teilweise in der gleichen, vorzugsweise die Symmetrieachse der Verschlussklammer senkrecht schneidenden Ebene liegen. Ebenso ist es aber auch möglich, dass diese Flächen in zwei sich schneidenden und mit der Symmetrieachse der Verschlussklammer einen spitzen Winkel einschließenden Ebenen angeordnet sind.

Bei der Verarbeitung von Verschlussklammern ist neben der vorstehend genannten Gefahr, dass nach der Verformung der Verschlussklammer sich an dieser Risse zeigen, auch von Bedeutung, dass das Abtrennen der einzelnen Verschlussklammer von einem aus den Verschlussklammern gebildeten Klammerstrang mit möglichst geringen Kräften geschehen kann und dass die dabei entstehende Geräuschemission gering ist. Um dieses Ziel zu erreichen, kann die erfindungsgemäße Verschlussklammer weiterhin im Bereich der voneinander wegweisenden stirnseitigen Enden der Verbindungsfortsätze Einschnürungen aufweisen, die sich in Richtung der stirnseitigen Enden der Verbindungsfortsätze verjüngen. Diese Einschnürung bzw. Verjüngung des Verbindungsfortsatzes in Richtung seines freien Endes reduziert den Gleitwiderstand des Stempelwerkzeuges, wenn der Stempel auf die Verschlussklammer trifft, da die um einen kleinen Radius abgewinkelten Verbindungsfortsätze das Eintauchen des gewölbten Stempels erleichtern. Weiterhin erzeugen die Verbindungsfortsätze bei einer verschlossenen Klammer oben und innen eine leichte Herzform, in dem sich die Verbindungsfortsätze durch den Stempel nach innen biegen. Dies erhöht die Festigkeit der Verschlussklammer.

Grundsätzlich können die sich in Richtung des freien Endes der Verbindungsfortsätze vorgesehenen Verjüngungen durch unterschiedliche geometrische Ausgestaltungen erzielt werden. So ist es beispielsweise denkbar, die Verjüngung durch eine in Draufsicht eine Keilform aufweisende Ausgestaltung zu bewirken oder aber durch zwei zueinander weisende konkave Rundungen. Selbstverständlich ist auch jede andere Ausgestaltung möglich.

Um das sack- oder wurstförmige Produkt sicher zu verschließen, wird, wie dies bereits eingangs erwähnt worden ist, die Verschlussklammer um einen zu einem Zopf gerafften Abschnitt des Verpackungshüllenmaterials plastisch verformt. Je nach Höhe der Zuhaltekraft bestimmt sich auch der Widerstand der Verschlussklammer gegen ein in axialer Richtung erfolgendes Abziehen der Klammer von dem sack- bzw. wurstförmigen Produkt. Um hier einen zusätzlichen Widerstand zu erhalten, kann weiterhin vorgesehen sein, dass an den zueinander weisenden Flächen des Klammerbodens und der beiden Klammerschenkel wenigstens eine sich zumindest teilweise längserstreckende Profilausnehmung vorgesehen ist. Vorzugsweise erstreckt sich diese Profilausnehmung zumindest annähernd über die gesamten zueinander weisenden Flächen des Klammerbodens und der beiden Klammerschenkel.

Zur weiteren Steigerung des Widerstandes gegen ein axiales Abziehen der Verschlussklammer kann neben einer Profilausnehmung eine zweite vorgesehen sein, wobei beide Profilausnehmungen vorzugsweise parallel und beabstandet zueinander verlaufen.

Im Falle nur einer Profilausnehmung ist es besonders vorteilhaft, wenn diese entlang der Mittellängsachse der zueinander weisenden Flächen des Klammerbodens und der Klammerschenkel verläuft. Sind dagegen zwei Profilausnehmungen vorgesehen, so können diese beidseits entlang der Mittellängsachse der zueinander weisenden Flächen des Klammerbodens der beiden Klammerschenkel verlaufen.

Die Profilausnehmung kann unterschiedliche Ausgestaltungen besitzen. Besonders vorteilhaft ist es, wenn die Profilausnehmung durch eine zumindest annähernd V-förmige Kerbe gebildet ist.

Hinsichtlich des Klammerstrangs aus Verschlussklammern wird die vorstehende Aufgabe durch die Merkmale des Anspruchs 12 gelöst. In den beiden sich daran anschließenden Ansprüchen 13 und 14 finden sich vorteilhafte Ausgestaltungen hierzu.

Der erfindungsgemäße Klammerstrang aus aneinander hängenden Verschlussklammern, wie sie vorstehend im Zusammenhang mit der Erfindung erläutert worden sind, ist insbesondere dadurch gebildet, dass die Verschlussklammern an den Verbindungsfortsätzen, die an den freien Enden der Klammerschenkel vorgesehen sind, kettenartig, vorzugsweise einstückig miteinander verbunden sind.

Um die Verarbeitung der zu einem Strang zusammengefügten Verschlussklammern zu erleichtern, ist es weiterhin vorteilhaft, wenn diese auf eine Rolle aufgewickelt sind.

Wie bereits vorstehend erwähnt, können unterschiedliche Größen für die Verschlussklammern vorgesehen werden, um unterschiedlichen Anforderungen hinsichtlich Zuhaltekraft, Umschließungsdurchmesser usw. genüge leisten zu können. Mit jeder Verschlussklammer- bzw. Clipgröße ist es notwendig, ein entsprechendes Werkzeug, insbesondere eine entsprechende Matrize bereitzustellen. In der Vergangenheit hat dies häufig zu Problemen dahingehend geführt, dass eine falsche Matrize zur Verarbeitung einer bestimmten Klammergröße eingesetzt worden ist.

Wie bereits ebenfalls vorstehend erwähnt worden ist, können die Verschlussklammern mit einer entsprechenden Prägung versehen sein, die jedoch von einer Bedienperson falsch interpretiert oder falsch verstanden werden kann. Deshalb ist es vorteilhaft, wenn auf der Rolle wenigstens eine maschinenlesbare Kennung vorgesehen ist. In einem solchen Fall ist es möglich, dass die die Verschlussklammern verarbeitende Maschine die notwendigen Informationen von dieser maschinenlesbaren Kennung entnehmen kann und im Falle einer falsch zugeordneten Matrize ein entsprechendes Störsignal ausgibt und den Betrieb einstellt.

Hinsichtlich der Matrize wird die vorstehende Aufgabe durch die Merkmale des Anspruchs 15 gelöst. Insbesondere wird dabei eine Matrize zum Verarbeiten von Verschlussklammern gemäß der Erfindung vorgesehen, wobei der die Verschlussklammer zumindest teilweise haltende Matrizenboden eine zur teilkreisbogenförmigen Rundung des Verschlussklammerbodens korrespondierende Rundung aufweist. Durch die Rundung des Matrizenbodens wächst die Matrize mit der jeweiligen Klammergröße mit, d.h., bei jeder Verschlussklammer wird eine Matrize zugeordnet, sodass das sogenannte Überlaufen des Klammermaterials ausgeschlossen werden kann.

Zu erwähnen ist noch, dass die erfindungsgemäße Verschlussklammer einen linearen Verfahrweg für das oder die Schließwerkzeuge ermöglicht. Insbesondere kann der Stempel in gerader Linie vorzugsweise senkrecht von oben auf die waagerecht in der Matrize liegende, offene Verschlussklammer verfahren. Beim Auftreffen des Stempels auf die Verschlussklammer ruht diese in einer festen Position in der erfindungsgemäßen Matrize. Hierdurch kann im Gegensatz zum Stand der Technik ein seitliches Verdrehen der Verschlussklammer vermieden werden, wodurch der Ausschuss an hergestellten Produkten verringert werden kann. Darüber hinaus reduziert sich hierdurch auch die Beanspruchung der die Verschlussklammern verarbeitende Maschine und damit deren Verschleißkosten.

Weitere vorteilhafte Ausgestaltungen sowie zwei Ausführungsbeispiele der erfindungsgemäßen Verschlussklammer sowie ein Ausführungsbeispiel einer erfindungsgemäßen Matrize werden nachstehend im Zusammenhang mit den beigefügten Zeichnungsfiguren erläutert. Die in Verbindung mit der Beschreibung verwendeten Begriffe "links", "rechts", "oben" und "unten" beziehen sich auf die Zeichnungsfiguren in einer Ausrichtung mit normal lesbaren Figurenbezeichnungen und Bezugszeichen. Hierbei ist:
- Fig. 1A - 1D: verschiedene Ansichten bzw. Schnittansichten eines ersten Ausführungsbeispiels einer erfindungsgemäßen Verschlussklammer;
- Fig.2A - 2D: verschiedene Ansichten bzw. Schnittansichten eines zweiten Ausführungsbeispiels einer erfindungsgemäßen Verschlussklammer; und
- Fig. 3A, 3B: eine Seitenansicht sowie eine perspektivische Ansicht einer erfindungsgemäßen Matrize.

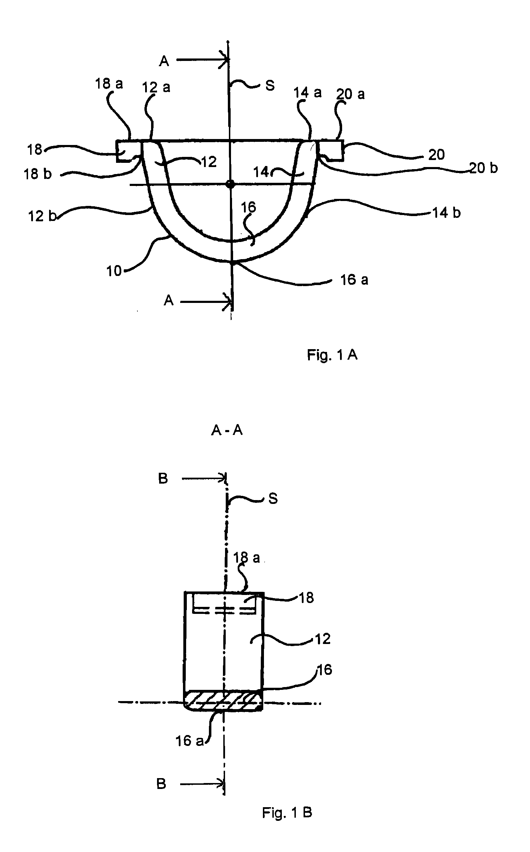

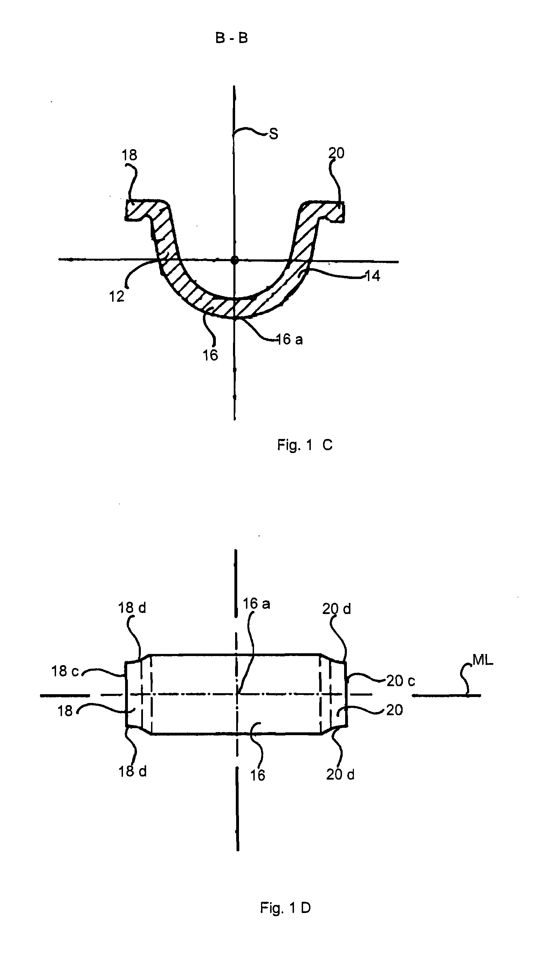

Das in den Fig. 1A bis 1D gezeigte erste Ausführungsbeispiel einer erfindungsgemäßen Verschlussklammer 10 ist aus einem Aluminiumdraht oder Aluminiumblechstreifen hergestellt (selbstverständlich kann aber auch jedes andere geeignete Material für die Herstellung der Verschlussklammer 10 eingesetzt werden). Wie insbesondere aus den Fig. 1A und 1C ersichtlich ist, besitzt die Verschlussklammer 10 die Form des Buchstabens "V", wobei aber die beiden zumindest annährend gleich langen Klammerschenkel 12, 14 der Verschlussklammer 10 nicht in einem spitzen Winkel aufeinander treffen, sondern durch eine teilkreisbogenförmige Rundung miteinander verbunden sind. Diese teilkreisbogenförmige Rundung bildet den Klammerboden 16 der Verschlussklammer 10. Wie ebenfalls aus den Fig. 1A und 1C ersichtlich ist, sind die Übergänge von dem Klammerboden 16 zu den beiden Klammerschenkeln 12, 14 gleichförmig und stetig, d.h. ohne einen Knick und dgl. Von der teilkreisbogenförmigen Rundung des Klammerbodens 16 aus erstrecken sich die beiden Klammerschenkel 12, 14 nach oben und divergieren dabei voneinander.

Der Aufbau der Verschlussklammer 10 in der Ebene der Fig. 1A ist achsensymmetrisch zu der in der Fig. 1A vertikal laufenden und in der Ebene der Zeichnungsfiguren 1A liegenden Symmetrieachse S, die durch den Scheitelpunkt 16a der teilkreisbogenförmige Rundung des Klammerbodens 16 verläuft, wie dies aus Fig. 1A entnehmbar ist. Ebenso ist die Verschlussklammer 10 in der Ebene der Fig. 1B achsensymmetrisch zu der Symmetrieachse S. Weiterhin liegen die Mittelachsen ML der beiden Klammerschenkel 12, 14 sowie die Symmetrieachse S und die von dem Klammerboden 16 definierte Teilkreisfläche in einer gemeinsamen Ebene.

Wie aus Fig. 1B ersichtlich ist, besitzt die Verschlussklammer 10 einen abgeflacht ovalen bzw. elliptischen Querschnitt, wobei die beiden Längsseiten des Ovals zumindest annährend parallel zu der Hauptachse der das Oval bildenden Ellipse verlaufen. Wie weiterhin aus Fig. 1B entnommen werden kann, ist die Länge der Nebenachse der Ellipse ein mehrfaches kleiner als die Hauptachse. Des weiteren ist der an den Scheitelpunkten der Ellipse vorgesehene Radius für den Scheitelteilkreisbogen der Ellipse ebenfalls ein mehrfaches kleiner als die Länge der Hauptachse. Schließlich erstrecken sich die beiden Scheitelteilkreisbogen der Ellipse über eine Winkel von 180°.

An ihren freien Enden 12a, 14a sind die Klammerschenkel 12, 14 mit je einer Abkröpfung 18, 20 versehen. Die Abkröpfungen 18, 20 weisen zumindest annährend in einem Winkel von 90° zu der Symmetrieachse S in entgegengesetzte Richtungen nach außen und sind zumindest annährend gleichlang. Die beiden von dem Scheitelpunkt 16a des Klammerbodens 16 wegweisenden Flächen 18a, 20a der Abkröpfungen 18, 20 liegen in einer gemeinsamen Ebene, die die Symmetrieachse S in einem Winkel von 90° schneidet. Um die Ankröpfung18, 20 leicht aus einem Abschnitt der Klammerschenkel 12, 14 herstellen zu können, sind Hinterschneidungen 18b, 20b an den Außenflächen 12b, 14b der Klammerschenkel 12, 14 vorgesehen.

Die Abkröpfungen dienen als Verbindungsfortsätze 18, 20, an denen sich zur Bildung eines nicht weiter dargestellten Strangs aus Verschlussklammern 10 jeweils eine weitere Verschlussklammer 10 mit ihrem zugehörigen Verbindungsfortsatz 20 bzw. 18 anschließen kann. Die Verbindung von aufeinanderfolgenden Verschlussklammern 10 des Strangs ist einstückig, wobei die Trennung der aufeinanderfolgenden Verschlussklammern 10 an ihren gemeinsamen Verbindungsfortsätzen 18, 20 bzw. 20, 18 jeweils mittig erfolgt. Selbstverständlich kann einer der beiden Verbindungsfortsätze 18, 20 der dargestellten Verschlussklammer 10 auch den Anfang des Klammerstrangs bilden.

Zur Verringerung der zur Trennung aufeinanderfolgender Verschlussklammern 10 eines Klammerstrangs notwendigen Schneid- bzw. Trennkraft sowie zur Verringerung der dabei entstehenden Geräuschemission sind im Bereich der freien Enden 18c, 20c der Verbindungsfortsätze 18, 20 Einschnürungen 18d, 20d vorgesehen (vgl. Fig. 1D). Wie insbesondere aus Fig. 1D ersehen werden kann, sind die beiden Einschnürungen 18d, 20d durch zwei zueinander weisende konkave Rundungen gebildet, die sich senkrecht zu den beiden von dem Scheitelpunkt 12a wegweisenden Flächen 18a, 20a der Verbindungsfortsätze 18, 20 erstrecken. Hierdurch verjüngen sich die Verbindungsfortsätze 18, 20 in Richtung ihrer freien Enden 18c, 20c symmetrisch und gleichmäßig in der Weise, dass bei aufeinanderfolgenden Verschlussklammern 10 eines Klammerstranges im Bereich der beiden einstückig miteinander verbunden Verbindungsfortsätze 18 bzw. 20 der Klammern 10 eine halbkreisförmige Ausnehmung vorgesehen ist, in deren Bereich der Trennschnitt erfolgt. Vorzugsweise verläuft der Trennschnitt entlang der die beiden Scheitelpunkte der gemeinsamen halbkreisförmigen Einschnürungen miteinander verbindenden Geraden der beiden aufeinanderfolgenden Verschlussklammern 10.

Es ist noch zu bemerken, dass alle Kanten der Verschlussklammer 10 abgerundet sind, um u.a. eine Beschädigung des Verpackungshüllenmaterials zu vermeiden.

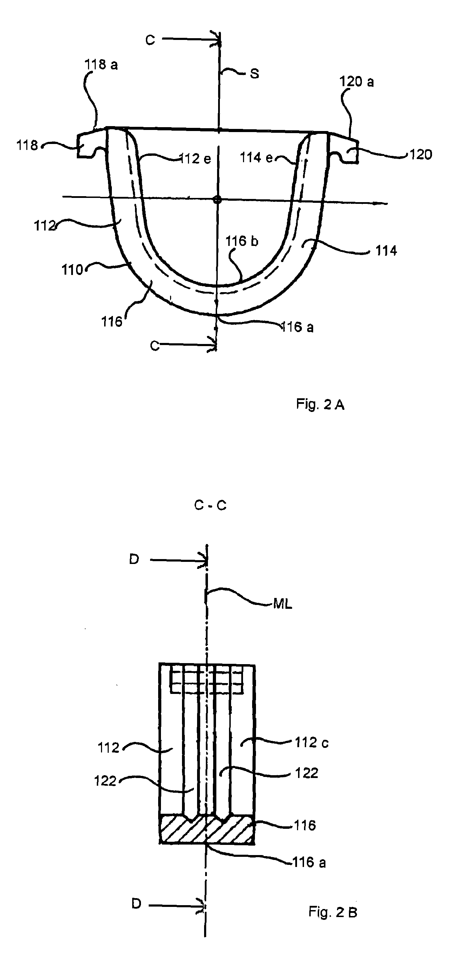

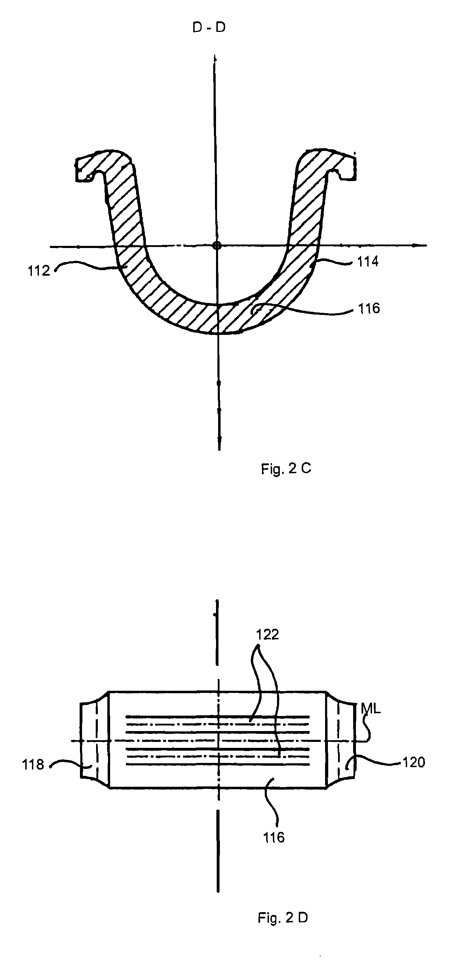

In den Fig. 2A bis 2D ist ein zweites Ausführungsbeispiel einer erfindungsgemäßen Verschlussklammer 110 wiedergegeben. Diese Verschlussklammer 110 weist einen geometrisch ähnlichen, in ihren Abmessungen aber größeren Aufbau zu der im Zusammenhang mit den Fig. 1A bis 1D erläuterten Verschlussklammer 10 auf, so dass nachstehend lediglich auf die Unterschiede eingegangen wird. Dabei werden funktionsgleiche bzw. geometrisch ähnliche Abschnitte der Verschlussklammer 110 mit den gleichen Bezugszeichen, wie sie für die Verschlussklammer 10 des ersten Ausführungsbeispiels verwendet wurden, erhöht um 100 bezeichnet.

Wie aus den Fig. 2A und 2C ersichtlich ist, liegen die von dem Scheitelpunkt 112a wegweisenden Flächen 118a, 120a der die Verbindungsfortsätze 118, 120 bildenden Abkröpfungen der Klammerschenkel 112, 114 nicht in der selben Ebene. Vielmehr schließen diese Flächen 118a, 120a einen spitzen Winkel miteinander ein, so dass sie schräg nach unten verlaufen und ihr gemeinsamer Winkelscheitelpunkt auf der Symmetrieachse S gegenüberliegenden zu dem Scheitelpunkt 116a des Klammerbodens 116 liegt.

Weiterhin ist an den Innenflächen 112e, 114e, 116b der Klammerschenkel 112, 114 und des Klammerbodens 116 zwei beidseits der Mittellängslinie ML dieser Flächen 112e, 114e, 116b angeordnete V-förmige Profilausnehmungen 122 vorgesehen. Es ist anzumerken, dass in der Projektion der Fig. 2B die Mittellängsachse ML der Innenflächen 112e und 116b mit der Symmetrieachse S zusammenfällt. Der Abstand der parallel zueinander verlaufenden und sich zumindest annährend über die gesamte Länge dieser Flächen 112e, 114e, 116b verlaufenden Profilausnehmungen 122 zueinander und zu der Mittellängslinien ML ist kleiner als zu den nicht näher bezeichneten Seitenränder der Klammerschenkel 112, 114 und des Klammerbodens 116. Diese Profilausnehmungen 122 dienen u.a. zu einem Verhaken der um einen gerafften Zopfabschnitt des Verpackungshüllenmaterials verschlossenen Klammer 110 und dem Verpackungshüllenmaterials zu erreichen.

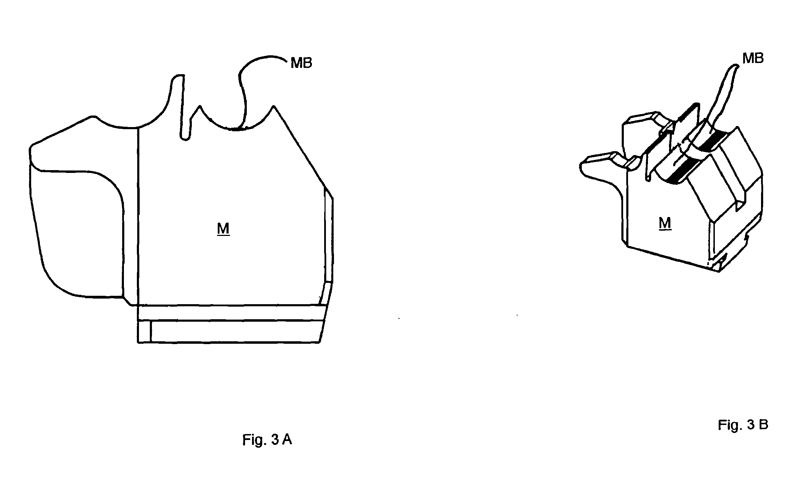

In den Fig. 3A und 3B ist eine erfindungsgemäße Matrize M in einer Perspektiv und Seitenansicht wiedergegeben. Diese Matrize M weist einen üblichen Aufbau mit dem Unterschied auf, dass der Matrizenboden MB eine zu der teilkreisförmigen Rundung des Klammerbodens 16, 116 korrespondierende Rundung besitzt. Im Bereich des Scheitelpunktes der teilkreisförmigen Rundung des Matrizenbodens MB sind quer verlaufende Rillen vorgesehen, um die Fixierung der Verschlussklammer 10, 110 nach deren Abtrennung von dem Klammerstrang zu erhöhen.

## Patentansprüche

1. Verschlussklammer für sack- oder wurstförmige Produkte, deren Verpackungshüllenmaterial aus wenigstens einer Verpackungsfolie gebildet ist, wobei die Verschlussklammer (10; 110) einen Klammerboden (16; 116) und zwei sich an den Klammerboden (16; 116) in die gleiche Richtung anschließende und von dem Klammerboden (16; 116) voneinander weg divergierende gerade Klammerschenkel (12, 14; 112, 114) aufweist, deren Mittellängsachsen und die Mittellängsachse (ML) des Klammerbodens (16; 116) in einer gemeinsamen Ebene liegen, der eine teilkreisbogenförmige Rundung aufweist, wobei an den freien Enden (12a, 14a) der Klammerschenkel (12, 14; 112, 114) von der Symmetrieachse (S) der Verschlussklammer (10; 110) wegweisende Verbindungsfortsätze (18, 20, 118, 120) vorgesehen sind,
**dadurch gekennzeichnet, dass** die Verschlussklammer einen Querschnitt in Form eines langestreckten Ovals hat, wobei vorzugsweise die Länge der Hauptachse des Ovals ein Vielfaches des Radius an den Krümmungsseiten beträgt, und wobei das Oval gerade Längsseiten aufweist, die zumindest annähernd parallel zu der ersten Hauptachse des Ovals verlaufen.

2. Verschlussklammer nach Anspruch 1,
**dadurch gekennzeichnet, dass** der Übergang zwischen dem Klammerboden (16; 116) und den beiden Klammerschenkeln (12, 14; 112, 114) gleichförmig ausgebildet ist.

3. Verschlussklammer nach einem der Ansprüche 1 oder 2,
**gekennzeichnet durch** eine im Wesentlichen über ihre gesamte Länge zumindest annähernd gleichbleibende Materialdicke.

4. Verschlussklammer nach einem der Ansprüche 1 bis 3,
**dadurch gekennzeichnet, dass** sie aus einem Draht hergestellt ist.

5. Verschlussklammer nach Anspruch 1,
**dadurch gekennzeichnet, dass** die Verbindungsfortsätze (18, 20) in einem Winkel von zumindest annähernd 90° nach außen abgewinkelt sind.

6. Verschlussklammer nach Anspruch 1,
**dadurch gekennzeichnet, dass** die Verbindungsfortsätze (118, 120) in einem spitzen Winkel zu der Symmetrieachse (S) abgewinkelt verlaufen.

7. Verschlussklammer nach einem der Ansprüche 1 bis 6,
**dadurch gekennzeichnet, dass** die vom Scheitelpunkt (16a; 116a) der teilkreisbogenförmigen Rundung des Klammerbodens (16; 116) wegweisenden Flächen (18a, 20a; 118a, 120a) der Verbindungsfortsätze (18, 20) zumindest teilweise in der gleichen, vorzugsweise die Symmetrieachse (S) der Verschlussklammer (10; 110) senkrecht schneidenden Ebene liegen.

8. Verschlussklammer nach einem der Ansprüche 1 bis 6,
**dadurch gekennzeichnet, dass** im Bereich der voneinander wegweisenden stirnseitigen Enden (18c, 20c) der Verbindungsfortsätze (18, 20) Einschnürungen (18d, 20d) vorgesehen sind, die sich in Richtung der stirnseitigen Enden (18c, 20c) der Verbindungsfortsätze (18, 20) verjüngen.

9. Verschlussklammer nach einem der Ansprüche 1 bis 8,
**dadurch gekennzeichnet, dass** an den zueinander weisenden Flächen (112e, 114e, 116b) des Klammerbodens (116) und der beiden Klammerschenkel (112, 114) wenigstens eine sich längserstreckende Profilausnehmung (122) vorgesehen ist.

10. Verschlussklammer nach Anspruch 9,
**dadurch gekennzeichnet, dass** sich die Profilausnehmung (122) zumindest annähernd über die gesamten zueinander weisenden Flächen (112e, 114e, 116b) des Klammerbodens (116) und der beiden Klammerschenkel (112, 114) erstreckt.

11. Verschlussklammer nach Anspruch 9 oder 10,
**dadurch gekennzeichnet, dass** wenigstens zwei Profilausnehmungen (122) parallel vorgesehen sind.

12. Klammerstrang aus Verschlussklammern,
**dadurch gekennzeichnet, dass** die Verschlussklammern (10; 110) nach einem der Ansprüche 1 bis 11 ausgebildet sind und dass die Verschlussklammern (10; 110) an Verbindungsfortsätzen (18, 20), die an den freien Enden (12a, 14a) der Klammerschenkel (112, 114) vorgesehenen sind, kettenartig miteinander verbunden sind.

13. Klammerstrang nach Anspruch 12,
**dadurch gekennzeichnet, dass** sie auf einer Rolle aufgewickelt ist.

14. Klammerstrang nach Anspruch 13,
**dadurch gekennzeichnet, dass** die Rolle mit wenigstens einer maschinenlesbaren Kennung versehen ist.

15. Matrize zum Verarbeiten von Verschlussklammern, die nach einem der Ansprüche 1 bis 11 aufgebaut sind, wobei der die Verschlussklammern (10; 110) haltende Matrizenboden (MB) einen zur teilkreisbogenförmigen Rundung der Verschlussklammern (10; 110) korrespondierende Rundung aufweist.
